# DEMANDE DE BREVET EUROPEEN

(11) **EP 1 628 501 A1**
(43) Date de publication de la demande: **22.02.2006**
(21) Numéro de dépôt: 05290923.1
(22) Date de dépôt: 27.04.2005
(51) Int. Cl.: H04Q 7/38, H04L 12/28

(54) **Système et procédé d'accès sécurisé de terminaux visiteurs à un réseau de type IP**

(30) Priorité: 28.04.2004 FR 0404537
(71) Demandeur: FRANCE TELECOM, 75015 Paris (FR)
(72) Inventeur: Fabre, Alain, 78310 Maurepas (FR)
(74) Mandataire: Bentz, Jean-Paul

(57) **Abrégé**

L'invention concerne un procédé d'accès sécurisé d'au moins un terminal visiteur (15) à un réseau hôte (10), caractérisé en ce qu'il comprend :
- la fourniture audit terminal visiteur d'une clé secrète temporaire (17) et d'un automate de connexion audit réseau hôte prévu pour être directement exécutable sur ledit terminal visiteur (15), ladite clé secrète (17) étant partagée par un service d'authentification (14) contrôlant l'accès audit réseau hôte, et
- l'exécution dudit automate sur ledit terminal visiteur (15), ladite exécution permettant l'établissement d'une connexion avec ledit service d'authentification (14), la mise en oeuvre d'un processus d'authentification mutuelle entre ledit terminal visiteur et ledit service d'authentification selon un protocole cryptographique utilisant ladite clé secrète partagée, et la connexion dudit terminal visiteur audit réseau hôte si l'authentification a réussi.

## Description

La présente invention se situe dans le domaine du contrôle d'accès à un réseau de transmission de données de type IP, typiquement un réseau intranet ou le réseau Internet, et concerne plus particulièrement, un système et un procédé d'accès sécurisé de terminaux visiteurs à un réseau local hôte de type IP.

La présente invention peut être mise en oeuvre pour contrôler l'accès à un réseau IP accédé via un réseau d'accès local sans fil, utilisant notamment la technologie de transmission sans fil basée sur la norme de réseau radioélectrique 802.11 et ses évolutions, regroupées sous l'appellation Wifi (pour « Wireless Fidelity »). Toutefois, la présente invention peut également être utilisée pour contrôler l'accès à un réseau IP filaire, par exemple de type Ethernet.

Le domaine de l'authentification pour sécuriser l'accès à un réseau IP est largement fourni en normes et en techniques diverses, qui vont de la simple utilisation d'un couple identifiant/mot de passe, à la mise en oeuvre de systèmes plus complexes comme le protocole OTP (« One Time Password ») ou EAP (« Extensible Authentication Protocol), en passant par les systèmes utilisant les infrastructures à clés publiques.

Toutefois, dans le contexte des réseaux IP accédés via une liaison radio de type Wifi, une particularité concernant leur accès réside dans le fait qu'il ne s'agit pas d'accès localisés, mais d'accès étendus et non contrôlables, rendant ainsi difficile la gestion de l'accès au réseau des visiteurs. Aussi, une première raison expliquant les problèmes de sécurité des réseau Wifi, tient au fait que le type de connexion pour ces réseaux s'appuie sur une transmission radio, qui se propage "dans l'air". La portée radio peut alors, soit dépasser les murs de l'entreprise, dans le cadre d'un réseau Wifi déployé au sein d'une entreprise, soit intentionnellement couvrir un lieu public, dans le cadre d'un réseau Wifi type « Hotspot ». Il en découle un risque d'accueillir certains visiteurs indélicats visant une utilisation frauduleuse des ressources informatiques des entreprises ou des propriétaires de Hotspots.

Une deuxième raison expliquant les problèmes de sécurité liés à l'accès Wifi est intrinsèque à la norme 802.11b, qui présente des failles dans ce domaine. Les problèmes de sécurité ont en effet été négligés par les concepteurs de la norme Wifi, avec comme conséquence directe que le protocole initial WEP (« Wired Equivalent Privacy »), mis en place pour protéger les réseaux Wifi a été cassé.

Au delà de ce qui précède, la faiblesse des réseaux radio utilisant la technologie 802.11 est principalement due à trois points, parmi lesquels une mauvaise implémentation de l'algorithme de chiffrement en continu RC4 sur lequel est basé le WEP, une absence de gestion de clés se traduisant par un partage de la même clé par tout visiteur, la clé étant de plus statique, et une absence d'authentification des machines qui se connectent au réseau, puisqu'une écoute d'un processus d'authentification basé sur un mécanisme d'envoi de challenges-réponses chiffrés par le WEP rendrait possible la détermination de la clé.

Le traitement de la problématique de la sécurisation de l'accès aux réseaux Wifi est de la responsabilité de trois organismes de normalisation : l'IEEE (« Institute of Electrical and Electronic Engineers » ), l'IETF (« Internet Engineering Task force ») et la Wifi Alliance.

L'IEEE a ainsi amélioré la situation en définissant la norme IEEE 802.1X, qui permet de prévoir une infrastructure sécurisée réalisant l'authentification des visiteurs en adaptant au transport radio le protocole d'authentification EAP (« Extensible Authentication Protocol ») et ses diverses méthodes d'authentification. Ce standard se décline principalement en deux sous parties consistant en une gestion et une création dynamique des clés à utiliser avec le WEP du 802.11 et en une authentification du visiteur auprès d'un serveur EAP de type Radius, dépendant de la méthode d'authentification choisie.

L'IETF a à son tour corrigé certaines insuffisances liées à la mise en oeuvre d'EAP, en définissant le protocole PEAP (« Protected EAP »). Ce protocole consiste notamment à envoyer les éléments d'authentification (identifiant/mot de passe) entre le visiteur et l'accès au réseau sans fil au travers d'un tunnel TLS (« Transport Layer Security ») sécurisé et crypté.

La WiFi Alliance propose quant à elle une norme baptisée WPA (« WiFi Protected Access ») qui reprend les résultats obtenus par le groupe de travail 802.11i de l'IEEE. WPA définit des mécanismes de confidentialité, d'intégrité et de distribution dynamique de clés. Ce protocole permet de mettre en oeuvre deux mécanismes d'authentification par secret de groupe ou par PEAP. WPA devrait rendre plus robuste le contrôle d'accès. Ainsi, selon WPA, il revient au serveur d'authentification de fournir des clés pour un cryptage temporaire de type TKIP (« Temporal Key Integrity Protocol ») et ce sont ces clés qui permettront au visiteur d'être authentifié par le serveur pour pouvoir accéder au réseau.

Toutefois, l'inconvénient de ces protocoles standardisés d'authentification exposés ci-dessus, permettant de sécuriser l'accès à un réseau local sans fil, est qu'ils nécessitent, pour pouvoir être mis en oeuvre, d'être déployés et pris en charge par les systèmes d'exploitation des terminaux visiteurs souhaitant se connecter au réseau.

Or, en imposant une technique standardisée pour réaliser l'authentification lors de l'accès au réseau, on ne couvre pas nécessairement toutes les configurations des terminaux visiteurs. Ainsi, un terminal visiteur dont le système d'exploitation n'est pas prévu pour prendre en charge le processus d'authentification imposé par le standard choisi pour sécuriser l'accès au réseau local ne pourra pas accéder au réseau, sauf à effectuer les opérations nécessaires pour rendre un matériel ou un logiciel apte à fonctionner sur le terminal visiteur pour la mise en oeuvre du processus d'authentification standardisé.

Aussi, les différents standards décrits qui permettent la sécurisation de l'accès à un réseau local sans fil, ne prennent pas en compte le problème de l'adaptation des terminaux visiteurs dont on ne connaît pas la configuration et sur laquelle on ne peut pas intervenir. Ces différents protocoles d'authentification standards ne sont donc pas forcément utilisables car ils dépendent de l'état technique du terminal utilisé par le visiteur et de sa configuration.

La présente invention a pour but de remédier à ces inconvénients, en proposant un procédé d'accès sécurisé par des terminaux visiteurs à un réseau hôte via une liaison sans fil, mais aussi filaire, qui soit totalement indépendant de la configuration des terminaux visiteurs, pour pouvoir précisément être mis en oeuvre dans le cas où l'on n'est pas maître de la configuration des terminaux visiteurs et où on ne souhaite pas imposer un protocole de sécurité standardisé.

L'invention est susceptible de s'appliquer à tout type de réseau hôte (dans un hôtel résidentiel etc...).

Avec cet objectif en vue, l'invention a pour objet un procédé d'accès sécurisé d'au moins un terminal visiteur à un réseau hôte, caractérisé en ce qu'il comprend :
- la fourniture audit terminal visiteur d'une clé secrète temporaire et d'un automate de connexion audit réseau hôte prévu pour être directement exécutable sur ledit terminal visiteur, ladite clé secrète étant partagée par un service d'authentification contrôlant l'accès audit réseau hôte, et
- l'exécution dudit automate sur ledit terminal visiteur, ladite exécution permettant l'établissement d'une connexion avec ledit service d'authentification, la mise en oeuvre d'un processus d'authentification mutuelle entre ledit terminal visiteur et ledit service d'authentification selon un protocole cryptographique utilisant ladite clé secrète partagée, et la connexion dudit terminal visiteur audit réseau hôte si l'authentification a réussi.

Avantageusement, la clé secrète temporaire et l'automate de connexion sont mémorisés dans un dispositif de mémoire directement connectable audit terminal visiteur, de façon à ce que les informations stockées dans ledit dispositif de mémoire soient lisibles directement par ledit terminal visiteur sans nécessiter d'installation préalable.

De préférence, la clé secrète temporaire est différente pour chaque terminal visiteur souhaitant accéder au réseau hôte.

Selon une caractéristique de l'invention, les clés secrètes temporaires fournies respectivement à chaque terminal visiteur du réseau hôte conjointement à l'automate de connexion, sont calculées pour une durée déterminée, de préférence une journée.

Selon un mode de réalisation, un numéro de validation caché est en outre stocké dans une partie de la mémoire du dispositif de mémoire non connue du terminal visiteur, l'établissement de la connexion avec le service d'authentification par l'automate de connexion étant soumise à une vérification préalable par ledit automate, lors de son exécution, du numéro de validation.

De préférence, le numéro de validation associé à chaque dispositif de mémoire est renouvelé à intervalle de temps prédéfini, de préférence de façon journalière.

De préférence, le processus d'authentification mutuelle entre le terminal visiteur et le service d'authentification est renouvelé à intervalles réguliers de durée paramétrable une fois que l'accès au réseau a été autorisé pour le terminal visiteur, ledit terminal étant déconnecté du réseau si l'authentification échoue.

L'invention concerne également un système d'accès sécurisé d'au moins un terminal visiteur à un réseau hôte, caractérisé en ce qu'il comprend, pour chaque terminal visiteur souhaitant accéder au réseau, un dispositif de mémoire directement connectable audit terminal visiteur, comprenant une clé secrète temporaire et un automate de connexion audit réseau prévu pour être directement exécutable sur ledit terminal visiteur, ledit système comprenant en outre un service d'authentification hébergé par le réseau et partageant ladite clé secrète temporaire, ledit automate comprenant des moyens pour initier un processus d'authentification mutuelle entre ledit terminal visiteur et ledit service d'authentification selon un protocole cryptographique utilisant ladite clé secrète partagée, et des moyens pour connecter ledit terminal visiteur audit réseau hôte si l'authentification a réussi.

De préférence, le dispositif de mémoire comprend une clé de mémoire prévu pour se connecter sur un port USB du terminal visiteur (15).

Selon un mode de réalisation, le système comprend un service de création de clés secrètes temporaires hébergé par le réseau hôte, ledit service comprenant des moyens pour transmettre automatiquement les clés secrètes temporaires crées au service d'authentification.

Selon un mode de réalisation, le système comprend une entité de gestion des dispositifs de mémoire connectée au réseau hôte, ladite entité comprenant des moyens pour récupérer à la demande les clés secrètes temporaires à partir du service de création de clés secrètes temporaires et des moyens pour charger chaque dispositif de mémoire respectivement avec une clé secrète temporaire.

Avantageusement, le système comprend des moyens pour sécuriser les échanges de clés secrètes temporaires au sein du réseau hôte entre le service de création de clés secrètes et l'entité de gestion des dispositifs de mémoire d'une part, et le service de création de clés secrètes et le service d'authentification d'autre part.

De préférence, les moyens de sécurisation des échanges mettent en oeuvre un algorithme de cryptage à clé symétrique.

Selon un mode de réalisation préféré, le réseau hôte est un réseau sans fil selon la norme Wifi.

Selon une variante, le réseau est un réseau éthernet filaire.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre l'architecture du système d'accès sécurisé via une liaison radio Wifi à un réseau local hôte de type IP selon la présente invention,
- la figure 2 illustre l'infrastructure de production au sein d'un réseau local hôte, des dispositifs de mémoire sur lesquels est basé le principe d'accès sécurisé au réseau local hôte selon la présente invention, et
- la figure 3 illustre le principe de sécurisation des échanges entre les différentes entités du réseau participant à la gestion du contrôle d'accès au réseau selon la présente invention.

La description qui suit est faite dans le cadre de l'accès par des terminaux visiteurs à l'Internet, mis à disposition par une entreprise hôte via un réseau local d'accès sans fil de type Wifi. Sans pour autant sortir du cadre de la présente invention, l'accès à l'Internet pourrait également être mis à disposition de terminaux visiteurs par un hôte fournisseur d'accès à l'Internet par le biais d'un hotspot, permettant de se connecter à l'Internet via un réseau local d'accès sans fil de type Wifi.

Il convient toutefois de noter que la présente invention pourrait également être mise en oeuvre dans le cas où l'accès à l'Internet serait obtenu via un réseau de type Ethernet filaire.

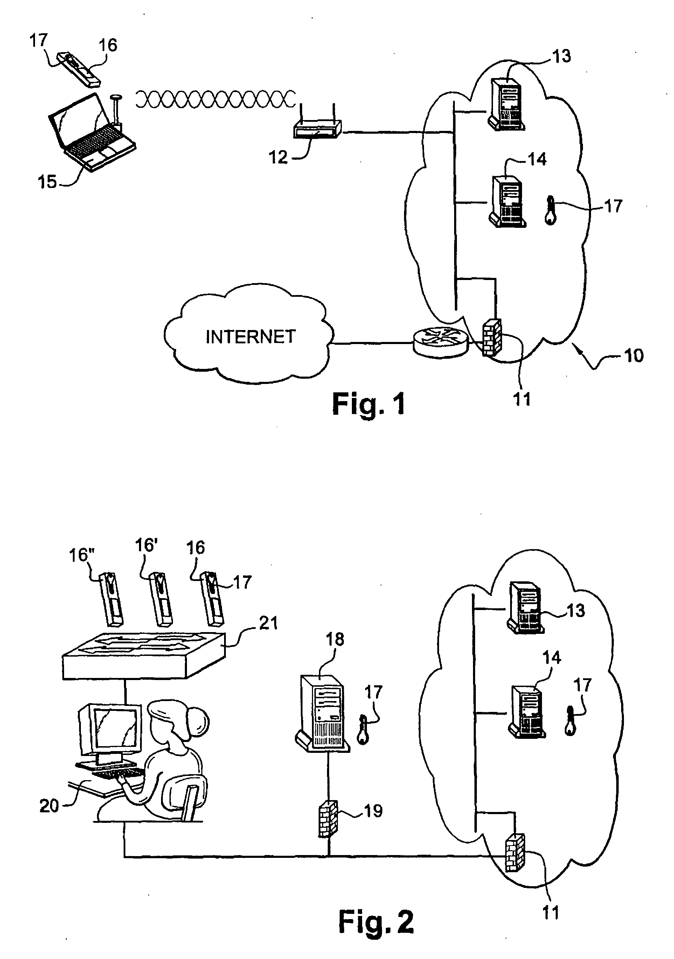

La figure 1 illustre donc l'architecture du système selon la présente invention pour la sécurisation de l'accès à un réseau local hôte sans fil 10 de type IP. Le réseau local hôte bénéficie d'une infrastructure classique pour l'accès sans fil de type 802.11b ou 802.11g, avec un parefeu 11 permettant de contrôler l'accès à Internet. En fonction de la politique de sécurité de l'entreprise hôte, ce contrôle peut être plus ou moins strict. Par exemple, certaines entreprises peuvent vouloir filtrer les URL's non professionnelles à l'aide de serveurs Proxy's. Cet aspect est toutefois hors du contexte de la présente invention.

L'architecture représentée à la figure 1 comprend un ensemble de bornes d'accès sans fil 12 de type 802.11b ou g, qui permettent de couvrir la zone dédiée aux visiteurs de l'entreprise hôte (salles de réunion, auditorium, hall d'accueil, etc...).

Le réseau IP d'accès local comprend classiquement un service DHCP embarqué dans un serveur DHCP 13, qui centralise et gère l'attribution des informations de configuration TCP-IP, en affectant automatiquement les adresses IP à des terminaux visiteurs 15 configurés pour utiliser le protocole DHCP.

Selon l'invention, le système d'accès sécurisé d'un terminal visiteur au réseau local hôte comprend en outre un service d'authentification 14, embarqué dans un serveur hébergé par le réseau local.

Toutefois, il est tout à fait envisageable que les différents services décrits, à savoir le service DHCP, le service d'authentification et le service de contrôle d'accès à l'Internet (mis en oeuvre par le parefeu par exemple) soient embarquées dans une seule machine.

Ainsi, selon l'invention, à l'arrivée d'un visiteur à l'accueil de l'entreprise, si ce dernier désire bénéficier de l'accès à l'Internet via le réseau local hôte de type Wifi de l'entreprise, il se voit remettre un dispositif de mémoire 16, lisible directement par son terminal 15 sans nécessiter d'installation préalable. Les terminaux visiteurs 15 prévus pour être utilisés dans le cadre de la présente invention comprennent de préférence des ordinateurs portables intégrant au minimum une carte de communication Wifi et/ou une connectique Ethernet. L'invention peut également être mis en oeuvre avec des terminaux de type PDA.

Le dispositif de mémoire 16 comprend de préférence une clé électronique de mémoire prévue pour se connecter sur un port USB d'un terminal visiteur et pour être compatible avec la plupart des systèmes d'exploitation existant susceptibles d'être installés sur les terminaux visiteurs. Une clé de mémoire d'une capacité de 64 Mo par exemple est suffisante pour la mise en oeuvre de l'invention. Le dispositif de mémoire peut également être constitué par un CD-ROM ou une disquette. Dans la suite de la description, on parlera de dispositif de mémoire sans préjuger de la technologie de support d'information utilisée.

Selon l'invention, le dispositif de mémoire 16 fourni à un terminal visiteur 15 souhaitant accéder aux services proposés par le réseau, embarque une clé secrète temporaire 17 et un automate logiciel de connexion au réseau local hôte, plus particulièrement chargé de réaliser l'authentification du visiteur pour sécuriser l'accès au réseau. L'automate logiciel mémorisé dans le dispositif de mémoire est prévu pour être directement exécutable sur le terminal visiteur et connaît la clé secrète temporaire.

La clé secrète 17 mémorisée dans le dispositif de mémoire est dite temporaire car elle dispose d'une durée de validité déterminée, de préférence une journée. Toutefois, l'intervalle selon lequel les clés secrètes temporaires utilisées par le système sont recalculées est à la discrétion de l'entreprise hôte.

Chaque clé secrète temporaire 17 embarquée sur un dispositif de mémoire 16 fourni à un terminal visiteur 15, est partagée par le service d'authentification 14 du réseau. De préférence, afin de permettre une authentification individuelle des dispositifs de mémoire 16 fournis aux terminaux visiteurs, les clés secrètes temporaires embarquées sont différentes pour chacun d'entre eux.

Selon un mode de réalisation particulier de l'invention, les dispositifs de mémoire 16 embarquent de plus un numéro de validation caché dans une partie de la mémoire du dispositif de mémoire non connue du terminal visiteur. L'emplacement de ce numéro de validation, ainsi que le numéro lui même, sont par contre connus de l'automate logiciel. Le numéro de validation associé à chaque dispositif de mémoire est prévu pour être renouvelé à intervalle de temps prédéfini, de préférence de façon journalière.

Comme on le verra plus loin, cette précaution procure un niveau de sécurité supplémentaire, permettant au système de se prémunir contre une tentative de copie sur plusieurs autres terminaux du contenu d'un dispositif de mémoire, à partir d'un terminal visiteur auquel a été valablement fourni le dispositif de mémoire.

Lorsque le visiteur arrive dans une zone de couverture Wifi, il va associer son terminal visiteur 15 à la borne d'accès Wifi 12, puis il va relier à son terminal le dispositif de mémoire 16 qui lui a été fourni à l'accueil de l'entreprise hôte. Le terminal visiteur va alors lancer l'automate logiciel de connexion, lequel est prévu pour rester actif toute la session. L'activation de l'automate logiciel se fait par simple clic sur le fichier exécutable correspondant enregistré dans le dispositif de mémoire.

De préférence, le fichier exécutable de l'automate est scellé et sa première opération est de vérifier son intégrité, cette opération permettant de garantir au visiteur que le programme est exempt de virus.

Dans un deuxième temps, l'automate va vérifier le numéro de validation journalier du dispositif de mémoire. Pour ce faire, l'automate est programmé pour connaître l'emplacement de la mémoire où est mémorisé ce numéro de validation, inconnu du terminal visiteur. Si cette étape de vérification échoue, l'accès au réseau au terminal visiteur est refusé. De cette façon, si le contenu du dispositif de mémoire, à savoir la clé secrète temporaire et l'automate de connexion, est copié sur un autre terminal, l'exécution de l'automate sur cet autre terminal conduira à un accès refusé puisque l'automate ne pourra pas valider l'étape préalable de vérification du numéro journalier, ce dernier n'ayant normalement pas pu être copié sur l'autre terminal. Seul un terminal visiteur disposant effectivement d'un dispositif de mémoire pourra donc initier le processus d'accès sécurisé au réseau.

Une fois l'étape de vérification préalable du numéro journalier validée, l'automate établit une connexion avec le service d'authentification 14 pour mettre en oeuvre un processus d'authentification mutuelle entre le terminal visiteur et le service d'authentification.

Plus précisément, après avoir récupéré une adresse IP et la clé secrète temporaire, l'automate va ouvrir une session TCP/IP avec le serveur d'authentification, dont il connaît l'adresse et le numéro de port d'écoute. Puisque la clé secrète temporaire est partagée par le service d'authentification et le dispositif de mémoire connecté au terminal visiteur, la connexion TCP/IP initialisée entre le service d'authentification et le terminal visiteur est chiffrée et donc, un processus d'authentification mutuelle sur le mode client-serveur est réalisé selon un protocole cryptographique standard utilisant la clé secrète temporaire partagée. Le protocole cryptographique standard utilisé est par exemple basé sur l'algorithme cryptographique à clé symétrique de type AES (« Advanced Encryption Standard »), avec une clé de 128 bits.

Si l'authentification mutuelle a réussi, le terminal visiteur reçoit un message lui autorisant l'accès au réseau. La session du terminal visiteur est alors autorisée et le terminal visiteur peut utiliser les services fournis par le réseau et notamment l'accès à l'Internet.

Le service d'authentification selon l'invention crée alors une table de correspondance associant la clé secrète temporaire et l'adresse IP affectée au terminal visiteur.

L'automate de connexion reste quant à lui actif pendant toute la session et le processus d'authentification mutuelle est prévu pour être renouvelé à intervalles réguliers. Ainsi, à intervalles réguliers de durée paramétrables, l'automate est prévu pour exécuter à nouveau l'authentification mutuelle avec le service d'authentification. Cette vérification supplémentaire permet de s'assurer que l'adresse IP du terminal visiteur n'est pas usurpée.

Pendant la période d'activité de la session, l'automate contrôle également que le dispositif de mémoire est bien connecté au terminal visiteur et, en cas de retrait du dispositif de mémoire par le visiteur, l'automate est prévu pour s'arrêter automatiquement.

En fin de visite, le visiteur retire le dispositif de mémoire de son terminal et le restitue par exemple à l'accueil de l'entreprise hôte.

la figure 2 illustre l'infrastructure de production au sein du réseau local hôte, des dispositifs de mémoire prévus pour être fournis aux visiteurs et sur lesquels est basé le système d'accès sécurisé au réseau local hôte selon la présente invention.

La création des dispositifs de mémoire est par exemple journalière, le rythme de renouvellement de ces dispositifs de mémoire étant toutefois laissé à la discrétion de l'entreprise hôte. La création des dispositifs de mémoires comprend principalement le calcul des clés secrètes temporaires, prévues pour être envoyées au service d'authentification, et l'initialisation proprement dite desdits dispositifs avec les clés secrètes temporaires calculées.

Les étapes de calcul des clés secrètes temporaires et leur envoi au service d'authentification sont automatiques. En considérant par exemple que le calcul des clés secrètes temporaires est renouvelé chaque jour, ces étapes sont prévues pour se déclencher par exemple avant le début de chaque journée à heure fixe paramétrable. Le système selon l'invention comprend ainsi un service de création de clés secrètes temporaires 18 comprenant des moyens pour calculer des clés secrètes aléatoires 17 et pour les transmettre automatiquement au service d'authentification 14. Ce service de création de clés secrètes 18 est hébergé par un serveur au sein du réseau local hôte, dont l'accès est protégé, par exemple par un dispositif type parefeu 19.

le service de création de clés secrètes est prévu pour pouvoir n'être accédé que par une entité de gestion des dispositifs de mémoire 20, connectée au réseau local hôte. L'entité de gestion des dispositifs de mémoire 20 comprend de préférence un micro-ordinateur installé au niveau de l'accueil de l'entreprise.

La création de dispositifs de mémoire 16, 16', 16'' est donc lancée par l'entité de gestion 20. Pour ce faire, les clés secrètes temporaires précédemment calculées par le service de création des secrets 18, sont transmises à la demande à l'entité de gestion 20 pour l'initialisation des dispositifs de mémoire 16, 16', 16". L'entité de gestion 20 dispose pour ce faire d'un programme informatique lui permettant d'aller chercher et rapatrier à la demande les clés secrètes temporaires à partir du serveur de création des clés secrètes.

Une fois les clés secrètes temporaires à disposition de l'entité de gestion, le programme est prévu pour les écrire, sur des dispositifs de mémoire 16, 16', 16'', sur lesquels a été préalablement mémorisé l'automate logiciel de connexion. Ce dernier peut toutefois être écrit sur un dispositif de mémoire conjointement à l'écriture de la clé secrète temporaire. Pour la mise en oeuvre de cette phase d'initialisation des dispositifs de mémoire avec les clés secrètes temporaires, les dispositifs de mémoire peuvent être branchés sur un hub USB connecté à l'entité de gestion 20, le nombre de voies du hub étant dimensionné en fonction du nombre moyen de visiteurs accueillis par l'entreprise.

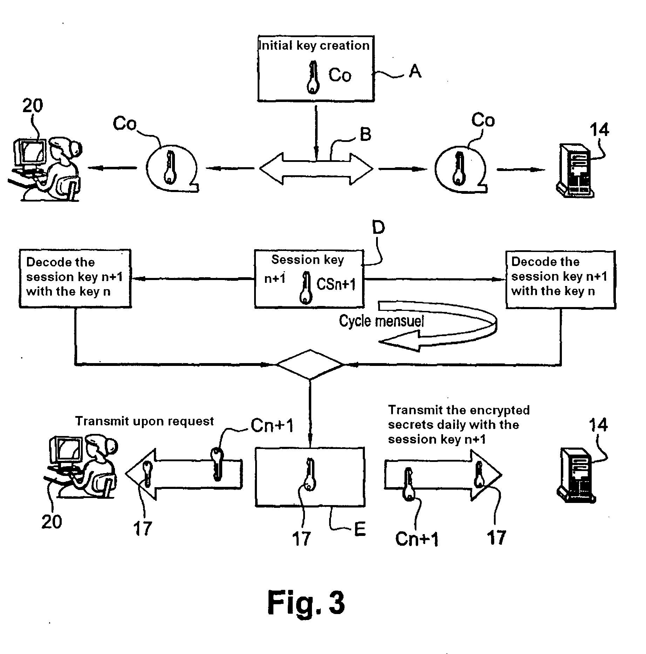

Les échanges de clés secrètes temporaires au sein du réseau local entre le service de création de clés secrètes 18 et l'entité de gestion des dispositifs de mémoire 20 d'une part, et le service de création de clés secrètes 18 et le service d'authentification 14 d'autre part, sont de préférence sécurisés, comme illustré à la figure 3. Les échanges de clés secrètes temporaires au sein du réseau local sont par exemple sécurisés par la mise en oeuvre d'un algorithme de cryptage à clé symétrique, par exemple selon le standard AES.

Pour ce faire, les échanges de clés secrètes temporaires sont sécurisés en utilisant des clés de session Cn, renouvelées par périodes paramétrables. Ces clés de session sont par exemple renouvelées par périodes mensuelles.

Dans une première étape A, un algorithme prévu à cet effet au niveau du service de création de clés secrètes, calcule une clé aléatoire initiale C0, par exemple une clé sur 128 bits de type AES, qui va permettre de sécuriser les échanges entre le service de création de clés secrètes 18, l'entité de gestion 20 et le service d'authentification 14. Cette clé C0 est alors installée manuellement à l'étape B sur l'entité de gestion 20 et le service d'authentification 14 de façon à initialiser le processus. Ensuite, le renouvellement des clés de session entre les différents intervenants que sont l'entité de gestion 20 et le service d'authentification 14 est automatique.

Plus précisément, le renouvellement des clés de session utilisées pour brouiller les échanges de clés secrètes temporaires au sein du réseau se passe comme suit. A intervalles réguliers, chaque mois par exemple, l'algorithme crée à l'étape D une nouvelle clé de session Cn+1, qui est envoyée à l'entité de gestion 20 et au service d'authentification 14 sous forme chiffrée avec la clé de session Cn, déjà partagée par chacun. L'entité de gestion 20 et le service d'authentification 14 sont alors à même de déchiffrer la nouvelle clé de session n+1 avec l'ancienne clé de session n, précédemment en leur possession. Le partage de la nouvelle clé de session Cn+1 entre le service de création de clés secrètes, le service d'authentification et l'entité de gestion permet alors de sécuriser les échanges entre eux.

De cette manière, chaque clé secrète temporaire 17, calculée par le service de création de clés secrètes 18 pour être stockée dans un dispositif de mémoire pour la mise en oeuvre du système d'accès sécurisé selon l'invention, peut être transmise chiffrée au sein du réseau avec la clé de session Cn+1 selon un algorithme de cryptage type AES par exemple. Cette transmission se fait de façon automatique pour le service d'authentification 14 et à la demande pour l'entité de gestion 20.

Ainsi, grâce au dispositif de mémoire remis à l'accueil embarquant une clé secrète temporaire et un automate logiciel de connexion et d'identification, il est possible d'assurer l'authentification d'un terminal visiteur pour lui autoriser un accès au réseau, tout en étant totalement indépendant de la configuration du terminal visiteur.

## Revendications

1. Procédé d'accès sécurisé d'au moins un terminal visiteur (15) à un réseau hôte (10), **caractérisé en ce qu'**il comprend :
- la fourniture audit terminal visiteur d'une clé secrète temporaire (17) et d'un automate de connexion audit réseau hôte prévu pour être directement exécutable sur ledit terminal visiteur (15), ladite clé secrète (17) étant partagée par un service d'authentification (14) contrôlant l'accès audit réseau hôte, et
- l'exécution dudit automate sur ledit terminal visiteur (15), ladite exécution permettant l'établissement d'une connexion avec ledit service d'authentification (14), la mise en oeuvre d'un processus d'authentification mutuelle entre ledit terminal visiteur et ledit service d'authentification selon un protocole cryptographique utilisant ladite clé secrète partagée, et la connexion dudit terminal visiteur audit réseau hôte si l'authentification a réussi.

2. Procédé selon la revendication 1, **caractérisé en ce que** la clé secrète temporaire (17) et l'automate de connexion sont mémorisés dans un dispositif de mémoire (16) directement connectable audit terminal visiteur (15), de façon à ce que les informations stockées dans ledit dispositif de mémoire soient lisibles directement par ledit terminal visiteur sans nécessiter d'installation préalable.

3. Procédé selon la revendication 1 ou 2, **caractérisé en ce que** la clé secrète temporaire (17) est différente pour chaque terminal visiteur souhaitant accéder au réseau hôte.

4. Procédé selon l'une quelconque des revendications précédentes, **caractérisé en ce que** les clés secrètes temporaires (17) fournies respectivement à chaque terminal visiteur (15) du réseau hôte conjointement à l'automate de connexion, sont calculées pour une durée déterminée, de préférence une journée.

5. Procédé selon l'une quelconque des revendications 2 à 4, **caractérisé en ce qu'**un numéro de validation caché est en outre stocké dans une partie de la mémoire du dispositif de mémoire non connue du terminal visiteur, l'établissement de la connexion avec le service d'authentification (14) par l'automate de connexion étant soumise à une vérification préalable par ledit automate, lors de son exécution, du numéro de validation.

6. Procédé selon la revendication 5, **caractérisé en ce que** le numéro de validation associé à chaque dispositif de mémoire est renouvelé à intervalle de temps prédéfini, de préférence de façon journalière.

7. Procédé selon l'une quelconque des revendications précédentes, **caractérisé en ce que** le processus d'authentification mutuelle entre le terminal visiteur (15) et le service d'authentification (14) est renouvelé à intervalles réguliers de durée paramétrable une fois que l'accès au réseau a été autorisé pour le terminal visiteur, ledit terminal étant déconnecté du réseau si l'authentification échoue.

8. Système d'accès sécurisé d'au moins un terminal visiteur (15) à un réseau hôte (10), **caractérisé en ce qu'**il comprend, pour chaque terminal visiteur souhaitant accéder au réseau, un dispositif de mémoire (16) directement connectable audit terminal visiteur (15), comprenant une clé secrète temporaire (17) et un automate de connexion audit réseau prévu pour être directement exécutable sur ledit terminal visiteur, ledit système comprenant en outre un service d'authentification (14) hébergé par le réseau et partageant ladite clé secrète temporaire, ledit automate comprenant des moyens pour initier un processus d'authentification mutuelle entre ledit terminal visiteur (15) et ledit service d'authentification (10) selon un protocole cryptographique utilisant ladite clé secrète partagée (17), et des moyens pour connecter ledit terminal visiteur audit réseau hôte si l'authentification a réussi.

9. Système selon la revendication 8, **caractérisé en ce que** le dispositif de mémoire (16) comprend une clé de mémoire prévu pour se connecter sur un port USB du terminal visiteur (15).

10. Système selon la revendication 8 ou 9, **caractérisé en ce qu'**il comprend un service de création de clés secrètes temporaires (18) hébergé par le réseau hôte, ledit service comprenant des moyens pour transmettre automatiquement les clés secrètes temporaires crées au service d'authentification (14).

11. Système selon la revendication 10, **caractérisé en ce qu'**il comprend une entité de gestion des dispositifs de mémoire (20) connectée au réseau local hôte, ladite entité comprenant des moyens pour récupérer à la demande les clés secrètes temporaires à partir du service de création de clés secrètes temporaires (18) et des moyens pour charger chaque dispositif de mémoire respectivement avec une clé secrète temporaire.

12. Système selon la revendication 11, **caractérisé en ce qu'**il comprend des moyens pour sécuriser les échanges de clés secrètes temporaires au sein du réseau hôte entre le service de création de clés secrètes (18) et l'entité de gestion des dispositifs de mémoire (20) d'une part, et le service de création de clés secrètes (18) et le service d'authentification (14) d'autre part.

13. Système selon la revendication 12, **caractérisé en ce que** les moyens de sécurisation des échanges mettent en oeuvre un algorithme de cryptage à clé symétrique.

14. Système selon l'une quelconque des revendication 9 à 13, **caractérisé en ce que** le réseau local hôte est un réseau sans fil selon la norme Wifi.

15. Système selon l'une quelconque des revendications 9 à 13, **caractérisé en ce que** le réseau local hôte est un réseau éthernet filaire.

16. Dispositif de mémoire (16), **caractérisé en ce qu'**il comprend des moyens de connexion directe à un terminal et des moyens de stockage d'une clé secrète temporaire et d'un automate logiciel de connexion à un réseau hôte, ledit automate comprenant des moyens pour mettre en oeuvre un processus d'authentification mutuelle entre ledit terminal et un service d'authentification hébergé par le réseau selon un protocole cryptographique utilisant ladite clé secrète.
